# FASCICULE DE BREVET EUROPEEN

(11) **EP 3 317 131 B1**
(45) Date de publication et mention de la délivrance du brevet: **17.11.2021**
(21) Numéro de dépôt: 16733167.7
(22) Date de dépôt: 08.06.2016
(51) Int. Cl.: B60G 21/05

(54) **DISPOSITIF DE SUSPENSION POUR UNE ROUE DE VÉHICULE AUTOMOBILE COMPORTANT UN BRAS MUNI D'UN CORPS EN TÔLE ET D'UNE TÊTE MASSIVE RAPPORTÉE**
AUFHÄNGUNGSVORRICHTUNG FÜR EIN KRAFTFAHRZEUGRAD MIT EINEM LENKER MIT EINEM BLECHKÖRPER UND EINEM DARAN BEFESTIGTEN MASSIVEN KOPF
SUSPENSION DEVICE FOR A MOTOR VEHICLE WHEEL COMPRISING AN ARM PROVIDED WITH A SHEET-METAL BODY AND A SOLID HEAD ATTACHED THERETO

(30) Priorité: 03.07.2015 FR 1556313
(43) Date de publication de la demande: 09.05.2018
(73) Titulaire: RENAULT s.a.s., 92100 Boulogne-Billancourt (FR)
(72) Inventeur: ROLLET, Remi, 91190 Gif Sur Yvette (FR); LE BASSER, Yann, 72530 Yvre L'eveque (FR); DELHAYE, Philippe, 72220 Saint Mars D'Outille (FR)
(86) Numéro de dépôt international: PCT/FR2016/051371
(87) Numéro de publication internationale: WO 2017/005998

(56) Documents cités:
- EP-A2- 2 209 657
- FR-A- 1 472 127
- FR-A- 1 586 884
- FR-A1- 2 972 389
- FR-A1- 2 976 519
- JP-A- H10 338 010
- US-A- 5 639 110

## Description

### DOMAINE TECHNIQUE DE L'INVENTION

L'invention concerne un dispositif de suspension pour au moins une roue arrière de véhicule automobile, qui comporte :
- un essieu à traverse souple élastiquement en torsion qui comporte au moins un bras longitudinal présentant :
   - un corps longitudinal ;
   - une extrémité avant destinée à être monté à rotation autour d'un axe transversal sur une caisse de véhicule automobile,
   - une tête formant un tronçon d'extrémité arrière du bras ;
- un porte-fusée qui est apte à recevoir une roue à rotation autour d'un premier axe transversal par l'intermédiaire d'une fusée, le porte-fusée étant monté pivotant autour d'un deuxième axe transversal directement sur la tête du bras avec un débattement déterminé autour d'une position angulaire stable vers laquelle il est rappelé élastiquement. De tels dispositifs sont connus par FR 2 972 389 A1 et par FR 2 976 519 A1.

### ARRIERE PLAN TECHNIQUE DE L'INVENTION

Généralement, un véhicule automobile comprend une caisse, des roues reposant sur le sol et un dispositif de suspension reliant la caisse aux roues. Ce dispositif de suspension comprend pour chaque roue un porte fusée de roue sur lequel ladite roue est montée à rotation autour d'un arbre transversal ayant une extrémité filetée, appelé « fusée de roue ». Le dispositif de suspension comprend aussi un essieu comportant deux bras sensiblement longitudinaux qui sont liés à la caisse par une extrémité avant. Une extrémité arrière de chaque bras est destinée à porter un porte-fusée apte à recevoir la fusée de roue associée à rotation. Les deux bras sont liés par une traverse déformable élastiquement en torsion qui s'étend sensiblement transversalement et qui est solidaire des bras respectifs des deux roues.

Lorsque la roue rencontre un obstacle sur le sol, cette roue subit un effort ayant une composante verticale et une composante longitudinale. Cet obstacle peut être une irrégularité du sol, une pierre, un trou ou tout autre objet ou formation en saillie ou en creux par rapport au sol.

La composante verticale est amortie par des moyens d'amortissement, tels qu'un amortisseur et/ou un ressort, du véhicule avant d'être transmise à la caisse et est donc peu ressentie par les passagers.

La composante longitudinale n'est en revanche pas amortie par les moyens d'amortissement. Elle est ressentie comme un choc par les passagers du véhicule.

Les dispositifs de suspension du type décrit précédemment permettent à la roue du véhicule de s'effacer longitudinalement par pivotement du porte-fusée autour de son axe de pivotement lorsqu'elle rencontre un obstacle. Le porte-fusée est ensuite rappelé élastiquement vers sa position stable, après amortissement de la composante longitudinale.

Le bras est traditionnellement un profilé creux réalisé par formage de tôle pour permettre d'abaisser le poids et le coût du dispositif de suspension tout en proposant un bras résistant. Un tel bras n'est cependant pas adapté pour recevoir directement le porte-fusée en pivotement car il est malaisé de réaliser de former l'extrémité arrière du bras de manière à recevoir le porte-fusée.

Un tel dispositif nécessite donc une pièce d'interface supplémentaire entre le bras et le porte-fusée. Cette pièce d'interface comporte l'arbre de pivotement du porte-fusée, ainsi qu'un logement pour recevoir les moyens de rappel élastiques. Cette pièce d'interface est elle-même fixée sur une face latérale d'un tronçon d'extrémité du bras, par exemple au moyen de vis.

Néanmoins, l'ajout d'une pièce d'interface augmente le coût de fabrication du dispositif de suspension.

En outre, la fixation de l'interface est susceptible d'être défaillante.

On a aussi proposé de monter le porte-fusée à rotation directement sur le bras. Néanmoins, il est alors nécessaire de réaliser un bras massif par forgeage et usinage ou encore par moulage et usinage au détriment du poids et du coût de la suspension.

### BREF RESUME DE L'INVENTION

La présente invention propose un dispositif de suspension du type décrit précédemment, caractérisé en ce que le corps du bras est réalisé par formage d'une tôle, tandis que la tête est formée par un élément massif qui est rapporté et fixé à une extrémité arrière libre du corps.

Selon d'autres caractéristiques de l'invention :
- la tête est une pièce forgée et usinée ;
- la tête est fixée à l'extrémité arrière libre du corps par soudage ;
- la tête est fixée à l'extrémité arrière libre du corps par vissage ;
- le bras est équipé de moyens de renfort qui chevauchent une zone d'interface entre la tête et le corps et qui sont destinés à reprendre une partie des effort s'appliquant à la tête pour les transmettre au corps en tôle ;
- le bras est équipé d'un élément de renfort en tôle qui est fixé au moins par ses deux extrémités longitudinales à la tête et au corps respectivement ;
- le corps du bras présente un profil qui enveloppe de manière complémentaire par l'extérieur un tronçon d'extrémité arrière du corps ainsi que la zone d'interface ;
- la tête comporte un logement apte à recevoir un moyen de rappel élastique qui est interposé entre le porte-fusée et la tête pour rappeler élastiquement le porte-fusée dans sa position angulaire stable ;
- la tête comporte un arbre transversal de réception du porte-fusée qui est aligné verticalement avec le logement ;
- l'essieu comporte deux bras réalisé selon les enseignements de l'invention dont chacun est apte à porter une roue, les corps des deux bras étant reliés par une traverse transversale souple élastiquement en torsion.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique de dessus qui représente un dispositif de suspension pour des roues arrière indépendantes de véhicule automobile réalisé selon les enseignements de l'invention ;
- la figure 2 est une vue en perspective qui représente un bras du dispositif de suspension de la figure 1 ;
- la figure 3 est une vue de détail qui représente la tête du bras de la figure 2 équipée d'un porte-fusée pivotant ;
- la figure 4 est une vue en couple longitudinale selon l'axe "4-4" de la figure 2 qui représente en détails la zone d'interface permettant de fixer la tête sur le corps du bras.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif des orientations longitudinale, dirigée d'arrière en avant, verticale, dirigée de bas en haut et transversale, dirigée de gauche à droite, qui seront indiquées par le trièdre "L,V,T" des figures. L'orientation longitudinale est dirigée selon le sens d'avancement en marche avant du véhicule.

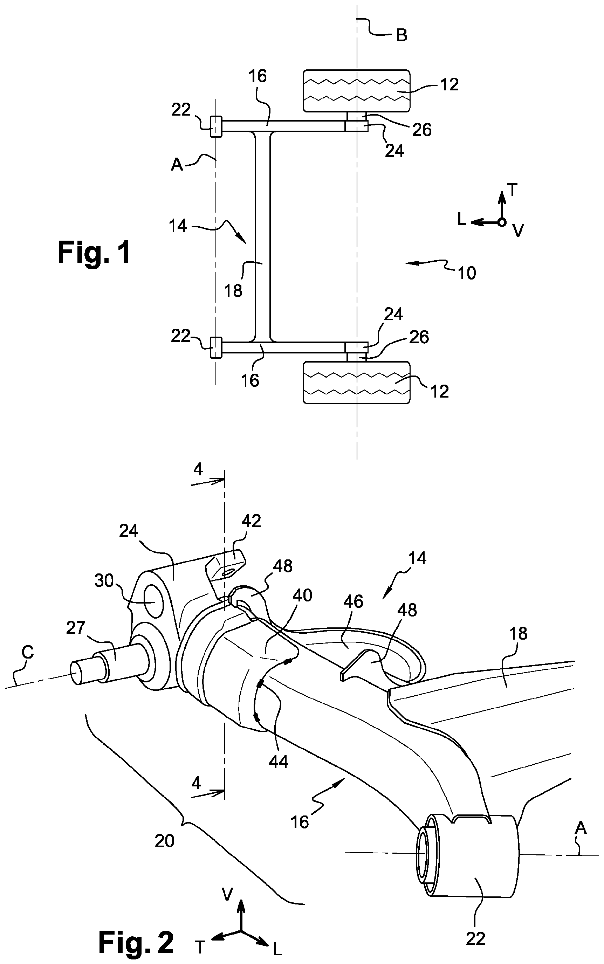

On a représenté à la figure 1 un dispositif 10 de suspension pour un train de deux roues 12 arrière indépendantes d'un véhicule automobile. Le dispositif 10 de suspension comporte notamment un essieu 14 arrière qui comporte deux bras 16 d'axe d'orientation globalement longitudinale.

L'essieu 14 comporte aussi une traverse 18 d'axe transversal qui relie les corps 20 des deux bras 16. Chaque extrémité transversale de la traverse 18 est liée de manière rigide avec le bras 16 associé, par exemple par soudage. La traverse 18 est souple élastiquement en torsion. Un tel type d'essieu 14 est parfois appelé "essieu semi-rigide" ou "essieu à poutre de torsion". Les propriétés élastiques de la traverse 18 lui permettent notamment de remplir une fonction anti-dévers qui limite le roulis de la carrosserie.

Les deux bras 16 sont identiques par symétrie par rapport à un plan longitudinal vertical médian qui coupe la traverse 18 en son milieu. Par la suite, on ne décrira donc qu'un seul bras 16, la description étant applicable par symétrie à l'autre bras 16.

On a représenté l'un des bras 16 à la figure 2. Le bras 16 comporte un corps 20 longitudinal. Une extrémité avant du bras 16 est destinée à être montée à rotation autour d'un axe "A" transversal sur une caisse du véhicule automobile. A cet effet, un tronçon d'extrémité avant du bras 16 comporte une articulation 22 élastique. Le bras est ainsi tiré par la caisse du véhicule lorsque ce dernier roule en marche avant.

Le corps 20 du bras 16 est formé par un corps tubulaire creux. Il est ici réalisé par formage de tôle. Ceci permet d'obtenir un corps 20 qui présente une rigidité adaptée à son usage tout en étant léger et peu onéreux à fabriquer.

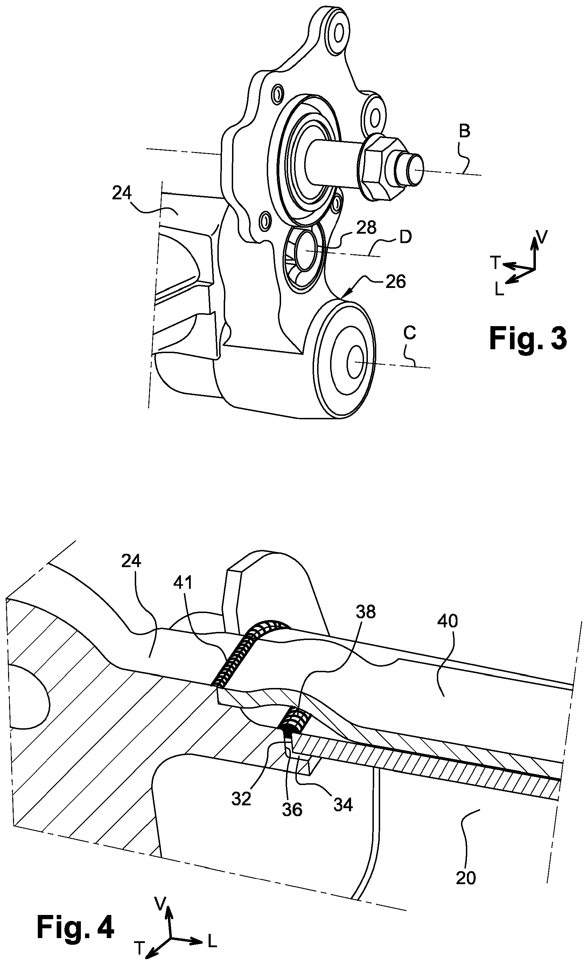

Un tronçon d'extrémité arrière du bras 16 est formé par une tête 24. Comme représenté à la figure 3, la tête 24 est destinée à porter un porte-fusée 26 qui est apte à recevoir la roue 12 associée à rotation autour d'un axe "B" transversal de rotation par l'intermédiaire d'une fusée (non représentée).

Le porte-fusée 26 est plus particulièrement monté pivotant autour d'un axe "C" transversal de pivotement directement sur la tête 24 du bras 16 avec un débattement déterminé autour d'une position angulaire stable vers laquelle il est rappelé élastiquement. Ceci permet de filtrer les chocs longitudinaux par pivotement du porte-fusée 26, et donc de la roue 12 associée, autour de l'axe "C" de pivotement.

Pour permettre le pivotement du porte-fusée 26, la tête 24 comporte ici un arbre 27 qui est monté fixe par rapport à la tête 24. L'arbre 27 s'étend ainsi axialement depuis une face latérale de la tête 24 dirigée vers la roue 12 associée au bras 16.

Les fonctions de filtration et de rappel élastique vers la position stable sont ici réalisées par une articulation 28 hydro-élastique qui est portée par le porte-fusée 26. L'articulation 28 hydro-élastique comporte par exemple une bague extérieure (non représentée) d'axe transversale "D" à l'intérieur de laquelle une bague intérieure est reçue concentrique avec interposition radiale d'un élément élastique, par exemple en matériau élastomère. La bague extérieure est destinée à être immobile par rapport au porte-fusée 26 tandis que la bague intérieure est destinée à être immobilisée par rapport à la tête 24 du bras 16.

L'immobilisation de la bague intérieure est réalisée par emboîtement transversal d'un élément (non représenté) en saillie transversale dans un logement 30 complémentaire de la tête 24. Le logement 30 est ici formé par un orifice débouchant transversalement qui loge l'articulation 28 hydro-élastique.

L'axe "C" de pivotement du porte-fusée 26 est agencé verticalement au-dessous de l'axe "B" de rotation de la roue 12. Le logement 30 est agencé verticalement au-dessus de l'arbre 27 de pivotement. Ainsi, l'axe "D" de l'articulation 28 hydro-élastique est aligné verticalement avec l'axe "C" de pivotement et avec l'axe "B" de rotation.

Il est très difficile d'obtenir une tête 24 de bras adaptée pour recevoir le porte-fusée 26 pivotant uniquement par formage de tôle. Il est notamment peu aisé de fixer l'arbre 27 et de réaliser un logement 30 débouchant.

Pour conserver les avantages d'un bras 16 réalisé par formage de tôle tout en disposant d'une tête 24 adaptée à recevoir le porte-fusée 26, l'invention propose que la tête 24 soit formée par un élément massif qui est rapporté et fixé à une extrémité 32 arrière libre du corps 20. En d'autres termes, la tête 24 prolonge longitudinalement vers l'arrière le corps 20 du bras 16.

Le terme "massif" signifie que la tête 24 est pleine par opposition au corps 20 qui est creux. La tête 24 n'est donc pas réalisée par formage d'une tôle. Dans l'exemple représenté aux figures, la tête 24 est une pièce forgée et usinée.

En variante non représentée de l'invention, la tête est obtenue par moulage et usinage.

La tête 24 est fixée à l'extrémité 32 arrière libre du corps 20 par soudage. A cet effet une portée 34 d'extrémité avant de la tête 24 présente une forme apte à être insérée de manière complémentaire dans l'extrémité 32 arrière libre ouverte du corps 20 tubulaire. Cette portée 34 d'extrémité avant est délimitée longitudinalement vers l'arrière par un épaulement 36. La portée 34 comporte en outre une cale (non représentée) qui permet de maintenir un léger écartement longitudinal de soudage entre l'extrémité 32 arrière libre du corps et l'épaulement 36. Ainsi, lors de l'opération de soudage, un cordon 38 de soudure est formé par un métal en fusion qui pénètre dans cet écartement pour assurer une bonne fixation de la tête 24 sur le corps 20. Le cordon 38 de soudure s'étend tout au long du bord d'extrémité libre du corps 20.

Par la suite, la portée 34 d'extrémité avant de la tête 24, l'épaulement 36 et l'extrémité 32 arrière libre du corps 20, après leur assemblage, seront désignés par le terme "zone d'interface".

En variante, la tête est fixée à l'extrémité arrière libre du corps par vissage. En ce cas, une tige filetée est montée fixe soit dans la tête, soit dans le corps, de manière à être fixée dans un taraudage fixé à l'autre élément.

Le bras 16 est susceptible d'être soumis à des efforts de flexion importants du fait d'effort orthogonaux à l'axe du bras 16 appliqués sur la tête 24. Les contraintes de flexion sont susceptibles de se concentrer à l'interface entre la tête 24 et le corps 20, et notamment au niveau du cordon 38 de soudure.

Pour éviter que les contraintes ne soient trop importantes dans cette zone d'interface, le bras 16 est ici équipé de moyens de renfort qui sont destinés à reprendre une partie des effort s'appliquant à la tête sur un tronçon d'extrémité arrière du corps en tôle pour éviter les concentration de contrainte au niveau de la zone d'interface entre la tête 24 et le corps 20. Une partie des efforts est ainsi reprise directement par le corps 20 sans passer par la zone d'interface.

A cet effet, le bras 16 est équipé d'un élément 40 de renfort en tôle qui est agencé autour du tronçon d'extrémité arrière du corps 20 et d'un tronçon avant de la tête 24 en chevauchant la zone d'interface entre la tête 24 et le corps 20.

L'élément 40 de renfort présente, en coupe transversale, un profil complémentaire qui enveloppe par l'extérieur le tronçon d'extrémité arrière du corps 20 ainsi que la zone d'interface. Il s'agit ici d'un profil en forme de "C" dont l'ouverture est dirigée transversalement en direction du bras 16 opposé.

En variante, l'élément de renfort présente un profil en forme de "U" ou encore il présente une forme de manchon de profil fermé qui entoure complètement le bras 16.

L'élément 40 de renfort comporte un premier bord d'extrémité longitudinale arrière qui est fixé à la tête 24 et il comporte un bord d'extrémité longitudinale avant qui est fixé au corps 20. Ces deux bords d'extrémité sont chacun fixés par soudage à leur support respectif. Ainsi, l'extrémité avant de l'élément 40 de renfort est fixée par l'intermédiaire d'un cordon 41 de soudure avant, tandis que son extrémité arrière est fixée par l'intermédiaire d'un cordon 44 de soudure arrière qui est ici réalisé en plusieurs tronçons distincts.

Du fait du chevauchement de la zone d'interface, le cordon 41 de soudure avant est agencé longitudinalement en arrière par rapport au cordon 38 de soudure de fixation de la tête 24 sur le corps 20.

Un tel élément 40 de renfort permet ainsi d'augmenter la rigidité du bras 16 au niveau de la zone d'interface, et il permet aussi d'augmenter la résistance à la rupture au niveau de la zone d'interface. L'élément 40 de renfort ainsi agencé travaille avantageusement en traction/compression longitudinale.

En outre, la tête 24 est équipée d'une aile 42 de fixation d'une extrémité inférieure d'un amortisseur (non représenté) dont l'autre extrémité est destinée à être fixée à la caisse du véhicule.

Le bras 16 porte aussi une coupelle 46 globalement horizontale qui s'étend transversalement vers l'autre bras 16 depuis une face latérale interne. Cette coupelle 46 est destinée à servir de support à un ressort de suspension (non représenté). La coupelle 46 est fixée à la tête 24, d'une part, et au corps 20 du bras 16, d'autre part, par l'intermédiaire de brides 48 respectives. La coupelle 46 participe ainsi à la fonction de renfort de la fixation de la tête 24 sur le corps 20 en complément de l'élément 40 de renfort.

Un tel bras 16 permet ainsi d'allier la légèreté et le coût peu élevé du corps 20 réalisé par formage de tôle avec une tête 24 adaptée pour recevoir le porte-fusée 26 pivotant.

## Revendications

1. Dispositif (10) de suspension pour au moins une roue (12) arrière de véhicule automobile, qui comporte :
- un essieu (14) à traverse (18) souple élastiquement en torsion qui comporte au moins un bras (16) longitudinal présentant :
- un corps (20) longitudinal ;
- une extrémité (22) avant destinée à être monté à rotation autour d'un axe (A) transversal sur une caisse de véhicule automobile,
- une tête (24) formant un tronçon d'extrémité arrière du bras (16) ;
- un porte-fusée (26) qui est apte à recevoir une roue (12) à rotation autour d'un premier axe (B) transversal par l'intermédiaire d'une fusée, le porte-fusée (26) étant monté pivotant autour d'un deuxième axe (C) transversal directement sur la tête (24) du bras (16) avec un débattement déterminé autour d'une position angulaire stable vers laquelle il est rappelé élastiquement ;
**caractérisé en ce que** le corps (20) du bras (16) est réalisé par formage d'une tôle, tandis que la tête (24) est formée par un élément massif qui est rapporté et fixé à une extrémité (32) arrière libre du corps (20).

2. Dispositif (10) selon la revendication précédente, **caractérisé en ce que** la tête (24) est une pièce forgée et usinée.

3. Dispositif (10) selon l'une quelconque des revendications précédentes, **caractérisé en ce que** la tête (24) est fixée à l'extrémité (32) arrière libre du corps (20) par soudage.

4. Dispositif (10) selon l'une quelconque des revendications 1 à 2, **caractérisé en ce que** la tête (24) est fixée à l'extrémité (32) arrière libre du corps (20) par vissage.

5. Dispositif (10) selon la revendication précédente, **caractérisé en ce que** le bras (16) est équipé de moyens de renfort qui chevauchent une zone d'interface entre la tête (24) et le corps (20) et qui sont destinés à reprendre une partie des effort s'appliquant à la tête (24) pour les transmettre au corps (20) en tôle.

6. Dispositif (10) selon la revendication précédente, **caractérisé en ce que** le bras (16) est équipé d'un élément (40) de renfort en tôle qui est fixé au moins par ses deux extrémités longitudinales à la tête (24) et au corps (20) respectivement.

7. Dispositif (10) selon la revendication précédente, **caractérisé en ce que** le corps (20) du bras (16) présente un profil qui enveloppe de manière complémentaire par l'extérieur un tronçon d'extrémité arrière du corps (20) ainsi que la zone d'interface.

8. Dispositif (10) selon l'une quelconque des revendications précédentes, **caractérisé en ce que** la tête (24) comporte un logement (30) apte à recevoir un moyen (28) de rappel élastique qui est interposé entre le porte-fusée (26) et la tête (24) pour rappeler élastiquement le porte-fusée (26) dans sa position angulaire stable.

9. Dispositif (10) selon la revendication précédente, **caractérisé en ce que** la tête (24) comporte un arbre (27) transversal de réception du porte-fusée (26) qui est aligné verticalement avec le logement (30).

10. Dispositif (10) selon l'une quelconque des revendications précédentes, **caractérisé en ce qu'**il comporte deux bras (16) réalisé selon l'une quelconque des revendications précédentes dont chacun est apte à porter une roue (12), les corps (20) des deux bras (16) étant reliés par la traverse (18) transversale souple élastiquement en torsion.

## Patentansprüche

1. Aufhängungsvorrichtung (10) für zumindest ein Hinterrad (12) eines Kraftfahrzeugs, umfassend:
- eine Achse (14) mit einem elastisch torsionsweichen Querträger (18), die zumindest einen Längsarm (16) aufweist mit:
- einem Längskörper (20);
- einem vorderen Ende (22), das dazu bestimmt ist, um eine Querachse (A) drehbar an einer Kraftfahrzeugkarosserie angebracht zu sein,
- einem Kopf (24), der einen hinteren Endabschnitt des Arms (16) ausbildet;
- einem Achsschenkelträger (26), der ein Rad (12) aufnehmen kann, das sich über einen Achsschenkel um eine erste Querachse (B) dreht, wobei der Achsschenkelträger (26) um eine zweite Querachse (C) drehbar direkt am Kopf (24) des Arms (16) mit einer bestimmten Auslenkung um eine stabile Winkelposition, in die er elastisch zurückgestellt wird, montiert ist; **dadurch gekennzeichnet, dass** der Körper (20) des Arms (16) durch Formung eines Blechs ausgeführt ist, während der Kopf (24) durch ein massives Element ausgebildet ist, das an einem freien hinteren Ende (32) des Körpers (20) angebracht und befestigt ist.

2. Vorrichtung (10) nach dem vorangehenden Anspruch, **dadurch gekennzeichnet, dass** der Kopf (24) ein geschmiedetes und bearbeitetes Teil ist.

3. Vorrichtung (10) nach einem der vorangehenden Ansprüche, **dadurch gekennzeichnet, dass** der Kopf (24) durch Schweißen am freien hinteren Ende (32) des Körpers (20) befestigt ist.

4. Vorrichtung (10) nach einem der Ansprüche 1 bis 2, **dadurch gekennzeichnet, dass** der Kopf (24) durch Schrauben am freien hinteren Ende (32) des Körpers (20) befestigt ist.

5. Vorrichtung (10) nach dem vorangehenden Anspruch, **dadurch gekennzeichnet, dass** der Arm (16) mit Verstärkungsmitteln ausgestattet ist, die eine Grenzfläche zwischen dem Kopf (24) und dem Körper (20) überlappen und die dazu bestimmt sind, einen Teil der auf den Kopf (24) ausgeübten Kräfte aufzunehmen, um sie auf den Körper (20) aus Blech zu übertragen.

6. Vorrichtung (10) nach dem vorangehenden Anspruch, **dadurch gekennzeichnet, dass** der Arm (16) mit einem Verstärkungselement (40) aus Blech ausgestattet ist, das zumindest mit seinen beiden Längsenden am Kopf (24) bzw. am Körper (20) befestigt ist.

7. Vorrichtung (10) nach dem vorangehenden Anspruch, **dadurch gekennzeichnet, dass** der Körper (20) des Arms (16) ein Profil aufweist, das einen hinteren Endabschnitt des Körpers (20) und den Grenzflächenbereich komplementär von außen umschließt.

8. Vorrichtung (10) nach einem der vorangehenden Ansprüche, **dadurch gekennzeichnet, dass** der Kopf (24) eine Aufnahme (30) aufweist, die ein elastisches Rückstellmittel (28) aufnehmen kann, das zwischen dem Achsschenkelträger (26) und dem Kopf (24) angeordnet ist, um den Achsschenkelträger (26) in seine stabile Winkelposition zurückzustellen.

9. Vorrichtung (10) nach dem vorangehenden Anspruch, **dadurch gekennzeichnet, dass** der Kopf (24) eine Querwelle (27) zur Aufnahme des Achsschenkelträgers (26) aufweist, die mit der Aufnahme (30) vertikal ausgerichtet ist.

10. Vorrichtung (10) nach einem der vorangehenden Ansprüche, **dadurch gekennzeichnet, dass** sie zwei Arme (16) aufweist, die nach einem der vorangehenden Ansprüche ausgeführt sind, wovon jeder ein Rad (12) tragen kann, wobei die Körper (20) der beiden Arme (16) durch den elastisch torsionsweichen Querträger (18) verbunden sind.

## Claims

1. Suspension device (10) for at least one motor vehicle rear wheel (12), which comprises:
- an axle (14) having a crossmember (18) that is elastically flexible when twisted and that comprises at least one longitudinal arm (16) having:
- a longitudinal body (20);
- a front end (22) intended to be rotatably mounted about a transverse axis (A) on a motor vehicle shell;
- a head (24) forming a rear end section of the arm (16) ;
- a spindle carrier (26) which can receive a wheel (12) rotating about a first transverse axis (B) by means of a spindle, the spindle carrier (26) being pivotably mounted about a second transverse axis (C) directly on the head (24) of the arm (16) with a determined play about a stable angular position toward which it is elastically returned;
**characterized in that** the body (20) of the arm (16) is produced by forming sheet metal, while the head (24) is formed by a solid element that is attached and fixed to a free rear end (32) of the body (20).

2. Device (10) according to the preceding claim, **characterized in that** the head (24) is a forged and machined piece.

3. Device (10) according to any one of the preceding claims, **characterized in that** the head (24) is fixed to the free rear end (32) of the body (20) by welding.

4. Device (10) according to any one of Claims 1-2, **characterized in that** the head (24) is fixed to the free rear end (32) of the body (20) by screwing.

5. Device (10) according to the preceding claim, **characterized in that** the arm (16) is supplied with reinforcing means which overlap an interface zone between the head (24) and the body (20) and which are intended to absorb some of the forces being applied to the head (24) in order to transmit them to the sheet-metal body (20) .

6. Device (10) according to the preceding claim, **characterized in that** the arm (16) is supplied with a sheet-metal reinforcing element (40) that is fixed at least by the two longitudinal ends thereof to the head (24) and to the body (20), respectively.

7. Device (10) according to the preceding claim, **characterized in that** the body (20) of the arm (16) has a profile which envelops, in a complementary manner from the outside, a rear end section of the body (20) and the interface zone.

8. Device (10) according to any one of the preceding claims, **characterized in that** the head (24) comprises a housing (30) that can receive an elastic return means (28) that is inserted between the spindle carrier (26) and the head (24) to elastically return the spindle carrier (26) into the stable angular position thereof.

9. Device (10) according to the preceding claim, **characterized in that** the head (24) comprises a transverse shaft (27) for receiving the spindle carrier (26) that is vertically aligned with the housing (30).

10. Device (10) according to any one of the preceding claims, **characterized in that** it comprises two arms (16) produced according to any one of the preceding claims, each of which can bear a wheel (12), the bodies (20) of the two arms (16) being linked by the transverse crossmember (18) that is elastically flexible when twisted.
